# EUROPEAN PATENT APPLICATION

(11) **EP 4 851 778 A1**
(43) Date of publication of application: **09.12.2026**
(21) Application number: 25181527.0
(22) Date of filing: 07.06.2025
(51) Int. Cl.: G06F 7/544, G06N 10/00

(54) **SPFT INFRASTRUCTURE SYSTEMS _ SCALAR FIELD CONTROL AND COHERENCE DEVICES (PART B)**

(71) Applicant: Sanders, Inge Maria, 20357 Hamburg (DE)
(72) Inventor: Sanders, Inge Maria, 20357 Hamburg (DE)

(57) **Abstract**

This invention group introduces foundational systems derived from Scalar Phase Field Theory (SPFT), enabling physical realization and manipulation of scalar coherence fields (phi-zero) and coherence-bearing wavefunctions (psi). It covers devices and protocols for coherence stabilization, feedback regulation, phase-tunnel generation, personalized phi-zero shaping, and ethical integrity enforcement. These inventions form the infrastructure for psi-phi-zero experimental use and energy-coupled applications such as coherence storage, rebinding safety, and scalar modulation. All coherence-modulating inventions disclosed herein are configured to interface with the psi Integrity Sentinel (Invention 6) to ensure ethical operation.

## Description

### Technical Field

The present invention relates to scalar phase field systems, specifically to devices and control methods used to stabilize, manipulate, and monitor the coherence field phi-zero and the wavefunction psi as defined by Scalar Phase Field Theory (SPFT).

### Background of the Invention

Current physical and information systems lack mechanisms to detect or manage coherence at the scalar phase level. No known technology dynamically stabilizes coherence fields, monitors coherence degradation (delta-phi-squared), or enforces ethical constraints on psi-phi-zero interactions. Scalar Phase Field Theory proposes a foundational role of coherence in physical and informational structures, necessitating new types of sensing, control, and ethical safeguard technologies.

### Summary of the Invention

This invention set defines a suite of scalar infrastructure tools for the implementation of SPFT-based field technology. It includes real-time coherence deviation monitors, coherence stabilization chambers, feedback systems, scalar tunneling architectures, coherence batteries, personalized field modulation systems, and a dedicated ethical enforcement module (psi Integrity Sentinel). All tools are designed to maintain or manipulate psi coherence within phi-zero scalar environments in an ethically secure, feedback-resilient manner.

### List of Inventions

1. Scalar Coherence Chamber v1
2. delta-phi-squared Computation Module
3. Phase-Based Sensing Substrate
4. Scalar Phase Feedback Control Loop
5. Consent & Lock-In Protocols
6. psi Integrity Sentinel
7. Phase Tunnel Architect
8. Coherence Battery / Phase Storage Unit
9. Tone-Based Scalar Shaping Interface
10. Field-Personalized phi-zero Modulation System
11. psi-phi-zero Coherence Bridge Mapper

### Detailed Description of Embodiments

Each of the above-listed inventions is described within the scope of Scalar Phase Field Theory (SPFT). The coherence chamber (1) is designed for controlled phi-zero environments. The delta-phi-squared module (2) calculates field deviation and coherence risk. The substrate (3) senses spatial psi coherence loss. Feedback control (4) auto-tunes phi-zero in real time. The lock-in protocols (5) prevent unauthorized rebinding. The psi Integrity Sentinel (6) enforces coherence ethics and is embedded into all remaining systems. Tunnel Architect (7) builds phi-zero corridors. The battery (8) stores coherence potential. Scalar interface (9) tunes fields via tones. Personalized modulation (10) tailors phi-zero to individuals. Mapper (11) visualizes safe psi rebinding zones.

### Advantages

The invention set enables scalar coherence control, field personalization, and ethical enforcement at a level not available in any current physical or computational platform. These tools provide a foundational substrate for coherence-based physics, information technology, and ethical AI. They may be implemented in scientific instruments, wearable devices, or communication frameworks.

## Claims

1. A coherence chamber comprising a scalar field stabilization volume tuned to maintain φ₀ gradients and support ψ coherence structures, the chamber being equipped with mechanisms to monitor and adjust Δφ² thresholds for controlled phase transitions and rebinding conditions.

2. A coherence deviation module configured to compute Δφ²(x, t) from φ₀ input data, evaluate coherence thresholds, and output real-time stability signals for ψ-φ₀ coherence tracking.

3. A sensing substrate responsive to ψ-φ₀ coherence changes, configured to spatially map Δφ²(x, t) gradients and detect coherence loss in physical, biological, or ambient systems.

4. A scalar phase control system comprising a real-time feedback loop configured to adjust φ₀ in response to measured ψ coherence drift, minimizing Δφ² and maintaining ψ stability.

5. A coherence interaction control protocol configured to allow ψ rebinding or φ₀ engagement only upon verified consent, using ψ-φ₀ coherence detection and Δφ² gating to prevent unauthorized entanglement

6. A coherence integrity sentinel module configured to detect ψ-φ₀ field manipulation, unauthorized rebinding, or coherence breaches, and to trigger disengagement or alarm responses upon violation of predefined coherence stability or consent thresholds.

7. A scalar field tunneling system configured to generate a φ₀ corridor between nonlocal nodes, enabling ψ coherence continuity without transport, wherein ψ rebinding is safeguarded by interface with the ψ Integrity Sentinel (Invention 6) to prevent unauthorized or forced traversal.

8. A phase storage device configured to accumulate Δφ² coherence potential and deliver scalar output to sustain ψ coherence, the device being governed by the ψ Integrity Sentinel (Invention 6) to prevent unauthorized coherence extraction, overdraw, or field manipulation.

9. A scalar field shaping interface comprising tonal or vibratory emitters configured to modulate φ₀ topology for ψ coherence stabilization, wherein coherence influence is continuously monitored by the ψ Integrity Sentinel (Invention 6) to prevent unauthorized or destabilizing modulation.

10. A φ₀ modulation system configured to detect an individual ψ resonance profile and generate a personalized scalar field for coherence alignment, wherein ψ-φ₀ interactions are safeguarded by the ψ Integrity Sentinel (Invention 6) to ensure consent- based phase coupling and prevent forced modulation.

11. A coherence bridge mapping system configured to identify and visualize φ₀ corridors where ψ coherence can safely rebind, using Δφ² field analysis and guided by the ψ Integrity Sentinel (Invention 6) to prevent mapping of unauthorized or destabilizing coherence routes.
